(19) **Europäisches Patentamt / European Patent Office / Office européen des brevets**

(11) **EP 3 462 589 A1**

(12) **EUROPÄISCHE PATENTANMELDUNG**

(43) Veröffentlichungstag:
03.04.2019 Patentblatt 2019/14

(51) Int Cl.:
*H02M 3/335* (2006.01)    *H02M 7/48* (2007.01)

(21) Anmeldenummer: 17193979.6

(22) Anmeldetag: 29.09.2017

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Siemens Aktiengesellschaft**
**80333 München (DE)**

(72) Erfinder:
• **HERGT, Martin**
**90411 Nürnberg (DE)**
• **LUTZE, Marcel**
**90459 Nürnberg (DE)**
• **NIELEBOCK, Sebastian**
**91301 Forchheim (DE)**
• **PFEIFER, Markus**
**90455 Nürnberg (DE)**
• **ZOCHER, Markus**
**91639 Wolframs-Eschenbach (DE)**

(54) **RESONANTER GLEICHSTROMSTELLER MIT INTEGRIERTEM TIEF- UND HOCHSETZSTELLER**

(57) Die Erfindung betrifft einen resonanten Gleichstromsteller (1) mit einem ersten Stromrichter (11) und einem zweiten Stromrichter (12), wobei die Stromrichter (11,12) eine Gleichspannungsseite und eine Wechselspannungsseite aufweisen, wobei die Wechselspannungsseiten des ersten und des zweiten Stromrichters (11,12) über einen Resonanzkreis (13) und einen Transformator (14) miteinander verbunden sind, wobei der Resonanzkreis (13) mittels eines Schalters (15) überbrückbar ist, wobei die Stromrichter (11,12) an der Gleichspannungsseite jeweils mit einer Reihenschaltung aus einem Kondensator (21) und einer Induktivität (22) elektrisch verbunden sind, wobei die Induktivität (22) jeweils mit einem weiteren Schalter (23) überbrückbar ist. Ferner betrifft die Erfindung ein Verfahren zum Betreiben eines derartigen resonanten Gleichstromstellers (1), wobei zum Übertragen von elektrischer Energie zwischen den Gleichspannungsseiten der Stromrichter (11,12) die weiteren Schalter (23) zur Überbrückung der Induktivität (22) geöffnet sind.

FIG 1

EP 3 462 589 A1

**Beschreibung**

Die Erfindung betrifft einen resonanter Gleichstromsteller mit einem ersten Stromrichter und einem zweiten Stromrichter, wobei die Stromrichter eine Gleichspannungsseite und eine Wechselspannungsseite aufweisen, wobei die Wechselspannungsseiten des ersten und des zweiten Stromrichters über einen Resonanzkreis und einen Transformator miteinander verbunden sind. Ferner betrifft die Erfindung ein Verfahren zum Betreiben eines derartigen resonanten Gleichstromstellers.

Gleichstromsteller werden verwendet, um die Spannungshöhe einer Gleichspannung zu verändern. Darüber hinaus können mit einem Gleichstromsteller unterschiedliche Gleichspannungsnetze, auch als DC Netze bezeichnet, derart miteinander verbunden werden, dass über den Gleichstromsteller ein gesteuerter oder geregelter Energieaustausch zwischen diesen Netzen möglich ist. Der Gleichstromsteller wird auch als Gleichstromwandler oder DC/DC Steller bzw. DC/DC Wandler bezeichnet. Mit Hilfe von Halbleitern wird die Spannung an der Eingangseite des Gleichstromstellers in eine vorgebbare Spannung an der Ausgangsseite des Gleichstromstellers umgewandelt. Um die Schaltverluste in den Halbleitern des Gleichstromstellers zu reduzieren werden bei resonanten Gleichstromstellern Wechselströme erzeugt, bei denen Schalthandlungen in oder nahe den Nulldurchgängen der Ströme vorgenommen werden. Oftmals sind Ein- und Ausgang von Gleichstromstellern galvanisch voneinander getrennt.

Ein resonanter Gleichstromsteller ist kompakter und kostengünstiger als die konventionelle Technik, bei der auf die Ausnutzung des Resonanzeffekts verzichtet wird. Bedingt durch die neue Technologie wird zudem die Komplexität, und damit wiederum der Platzbedarf des Stellers, weiter reduziert. Ein Transformator, der sich im Brückenzweig befindet, trennt galvanisch die mit dem Gleichstromsteller verbundenen DC-Netze.

Der Leistungstransfer zwischen zwei DC-Netzen wird nach dem Stand der Technik beispielsweise mit einer dual active bridge vorgenommen. Der Transformator befindet sich im Brückenzweigen zwischen dem ersten und dem zweiten Stromrichter und trennt galvanisch die mit den unterschiedlichen Stromrichtern verbundenen DC-Netze. Der erste und zweite Stromrichter sind dabei jeweils als Vollbrücke ausgebildet. Der Transformator wird nachgebildet über eine Streuinduktivität $L_6$ und einen idealen Transformator mit dem Windungsverhältnis 1:n. In den beiden Vollbrücken befinden sich Halbleiterschalter mit denen eine Wechselspannung im Brückenzweig erzeugt werden kann.

Die übertragene Leistung verhält sich entsprechend des relativen Phasenwinkels beider Vollbrücken zueinander gemäß der Gleichung

$$P(\Phi) = \frac{U_1^2}{f L_6} q \Phi (1 - 2|\Phi|)$$

mit

$$q = \frac{U_1}{n U_2}$$

und

$$f = \frac{1}{T}.$$

Dabei ist $U_1$ die Eingangsspannung, $U_2$ die Ausgangsspannung und f die Schaltfrequenz in Hertz des Gleichstromstellers. Der Winkel $\Phi$ ist der Phaseshift der Halbleiterschalter, der relativ zwischen beiden Vollbrücken eingestellt werden kann. Der Phaseshift-Winkel (l) ist im Betrieb der wesentliche Freiheitsgrad, mit welchem der Leistungstransfer variiert werden kann. Der Ausdruck q ist ein Wert, mit der sich der Modus des Gleichstromstellers vorgeben lässt. Mit Werten von q<1 befindet er sich im Buck-Betrieb und mit q>1 im Boost-Betrieb. Eine sorgfältige Wahl von q ist für den Arbeitsbereich der Schaltbedingungen für die Halbleiterschalter zu betrachten. Die Streuinduktivität $L_6$ des Transformators ist auf die Primärseite bezogen.

Hoch- und Tiefsetzsteller sind aus dem Stand der Technik bekannt und werden zum Hoch- und Tiefsetzen von Gleichspannungen genutzt. Dies kann entsprechend mit einen Transformator bei variabler Wicklungszahl verglichen werden.

Der Erfindung liegt die Aufgabe zugrunde, einen Gleichstromsteller zu verbessern.

Diese Aufgabe wird durch einen resonanter Gleichstromsteller mit einem ersten Stromrichter und einem zweiten Stromrichter gelöst, wobei die Stromrichter eine Gleichspannungsseite und eine Wechselspannungsseite aufweisen, wobei die Wechselspannungsseiten des ersten und des zweiten Stromrichters über einen Resonanzkreis und einen Transformator miteinander verbunden sind, wobei der Resonanzkreis mittels eines Schalters überbrückbar ist, wobei die Stromrichter an der Gleichspannungsseite jeweils mit einer Reihenschaltung aus einem Kondensator und einer Induktivität elektrisch verbunden sind, wobei die Induktivität jeweils mit einem weiteren Schalter überbrückbar ist. Ferner wird diese Aufgabe durch ein Verfahren zum Betreiben eines derartigen resonanten Gleichstromstellers gelöst, wobei zum Übertragen von elektrischer Energie zwischen den Gleichspannungsseiten der Stromrichter die weiteren Schalter zur Überbrückung der Induktivität geöffnet sind. Weiter wird die Aufgabe durch ein Verfahren zum Betreiben eines derartigen resonanten Gleichstromstellers gelöst, wobei zum Übertragen von elektrischer Energie von der Gleichspannungsseite des ersten Stromrichters zur Gleichspannungsseite des zweiten Stromrichters der Schalter zur Überbrückung des Resonanzkreises geöffnet ist, die weiteren Schalter zur Überbrückung der Induktivität geschlossen sind und Halbleiter des ersten Stromrichters takten. Des Weiteren wird die Aufgabe durch ein Verfahren zum Betreiben eines derartigen resonanten Gleichstromstellers gelöst, wobei zum Übertragen von elektrischer Energie von der Gleichspannungsseite des ersten Stromrichters zur Gleichspannungsseite des zweiten Stromrichters der Schalter zur Überbrückung des Resonanzkreises geschlossen ist, der weitere Schalter zur Überbrückung der Induktivität am ersten Stromrichter geschlossen ist, der weitere Schalter zur Überbrückung der Induktivität am zweiten Stromrichter geöffnet ist und Halbleiter des ersten Stromrichters takten. Ferner wird die Aufgabe durch ein Verfahren zum Betreiben eines derartigen resonanten Gleichstromstellers gelöst, wobei zum Übertragen von elektrischer Energie von der Gleichspannungsseite des zweiten Stromrichters zur Gleichspannungsseite des ersten Stromrichters der Schalter zur Überbrückung des Resonanzkreises geschlossen ist, der weitere Schalter zur Überbrückung der Induktivität am ersten Stromrichter geöffnet ist, der weitere Schalter zur Überbrückung der Induktivität am zweiten Stromrichter geschlossen ist und Halbleiter des zweiten Stromrichters takten.

Weitere vorteilhafte Ausgestaltungen der Erfindung sind in den abhängigen Ansprüchen angegeben.

Der Erfindung liegt die Erkenntnis zugrunde, dass sich die Energieübertragung zwischen zwei Gleichspannungsnetzen dadurch verbessern lässt, dass der Resonante Gleichstromsteller um die Funktion eines Hoch-/Tiefsetzstellers erweitert wird. Dazu wird jeweils an der Gleichspannungsseite des ersten und des zweiten Stromrichters eine Induktivität angeordnet, die mit einem weiteren Schalter überbrückbar ist. Damit kann der Leistungstransfer zwischen beiden DC-Netzen ermöglicht werden. Darüber hinaus können die Spannungen der einzelnen DC Netze nach oben oder unten gesetzt werden. Die Topologie ist so ausgeführt, dass beide Netze mittels eines Transformators galvanisch voneinander getrennt sind. Für einen reinen Tief-/Hochsetzstellerbetrieb werden die weiteren Schalter zur Überbrückung der Induktivität an der Gleichspannungsseite der jeweiligen Stromrichter geöffnet. Mit Hilfe der Halbleiterschalter der Stromrichter kann nun das Hochsetzen bzw. Tiefsetzen der Spannungen für die entsprechenden Gleichspannungsnetze erfolgen.

Ein besonderer Vorteil des Aufbaus liegt darin, dass durch die geeignete Wahl der Induktivität eine definierte Welligkeit bei einer vorgegebenen Frequenz, insbesondere der Resonanzfrequenz, realisiert werden kann.

So kann der Dynamikbereich des Gleichstromstellers über einen großen Ein- und Ausgangsspannungsbereich erhöhen werden. Dies geschieht mit einer Kombination aus einem resonanten Gleichstromsteller und dem Tiefsetzsteller und dem Hochsetzsteller, die durch das Hinzufügen von zwei Induktivitäten und drei Schaltern realisiert wird. Durch diese Maßnahme können die Vorteile der einzelnen Schaltungskonfigurationen gezielt genutzt werden, um den Wirkungsgrad über den Arbeitsbereich zu erhöhen.

Im Vergleich zu einem konventionellen Invers-Wandler, der über den gesamten Arbeitsbereich Ein- und Ausschaltverlust hat, hat ein resonanter Wandler den Vorteil, in direkter Nähe zur Resonanzfrequenz sehr geringe Ein- oder Abschaltverluste gegenüber konventionellen hartschaltenden Topologien aufzuweisen. Bei Arbeitspunkten, die sich weit entfernt von der Resonanzfrequenz befinden, werden beim resonanten Wandler hohe Blindleistungen in den Reaktanzen gespeichert, die im resonanten Netzwerk und der Vollbrücke zu Verlusten führen, und somit den Wirkungsgrad verschlechtern. In diesem Bereich ist es dann sinnvoll, den Hoch- oder Tiefsetzsteller anzuwenden. Somit können über den Arbeitsbereich gezielt unterschiedliche Funktionalitäten des Gleichstromstellers genutzt werden, um den Wirkungsgrad zu verbessern.

Der besondere Vorteil dieses neuen Aufbaus eines Gleichstromstellers beruht auf einer neuartigen Topologie eines DC-DC-Wandlers, der zum einen die Leistung zwischen beiden Gleichspannungsnetzen transferieren kann und gleichzeitig die Spannungen im jeweiligen Gleichspannungsnetz nach oben oder auch nach unten anpassen kann. Dies hat die Vorteile, dass der Transformator besonders kompakt aufgebaut werden kann. Darüber hinaus können unterschiedliche Funktionalitäten durch ein Minimum an Bauteilen realisiert werden.

Die Stromrichter können sowohl als Wechselrichter wie auch als Gleichrichter arbeiten. Daher ist mit dieser Anordnung der Gleichstromsteller für den bidirektionalen Betrieb geeignet. Das bedeutet, dass eine Energieübertragung in beide Richtungen des Gleichstromstellers erfolgen kann.

Bei einer vorteilhaften Ausgestaltung der Erfindung sind der erste und der zweite Stromrichter jeweils als dreiphasiger Stromrichter ausgebildet, wobei der Transformator als dreiphasiger Transformator ausgebildet ist, wobei in der Verbindung zwischen erstem Stromrichter und Transformator jede Phase einen Resonanzkreis aufweist, der mittels eines Schalters überbrückbar ist. Durch die Ausnutzung von drei Phasen kann die Gesamtleistung zur Übertragung zwischen beiden DC-Netzen um ungefähr 70% erhöht werden.

Im Folgenden wird die Erfindung anhand der in den Figuren dargestellten Ausführungsbeispiele näher beschrieben und erläutert. Es zeigen:

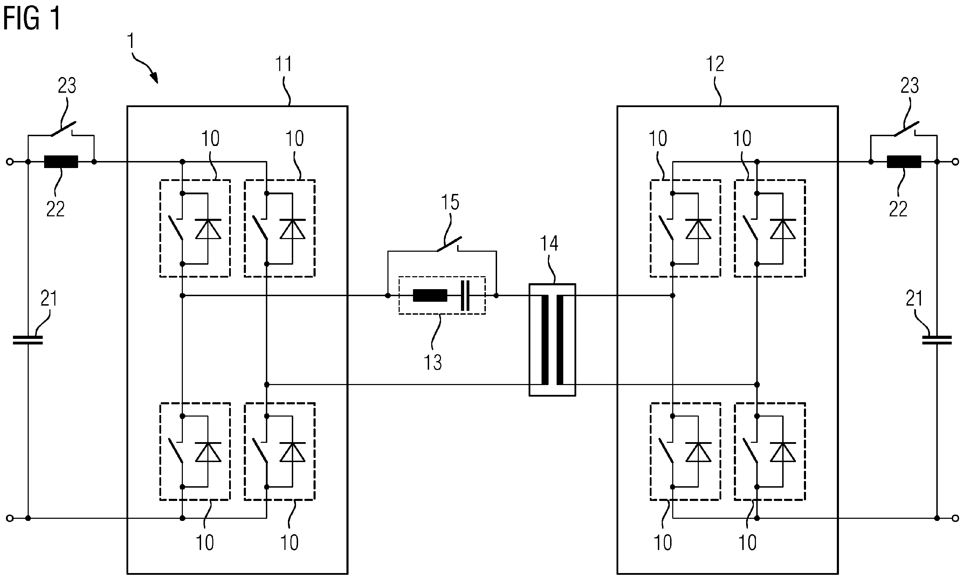

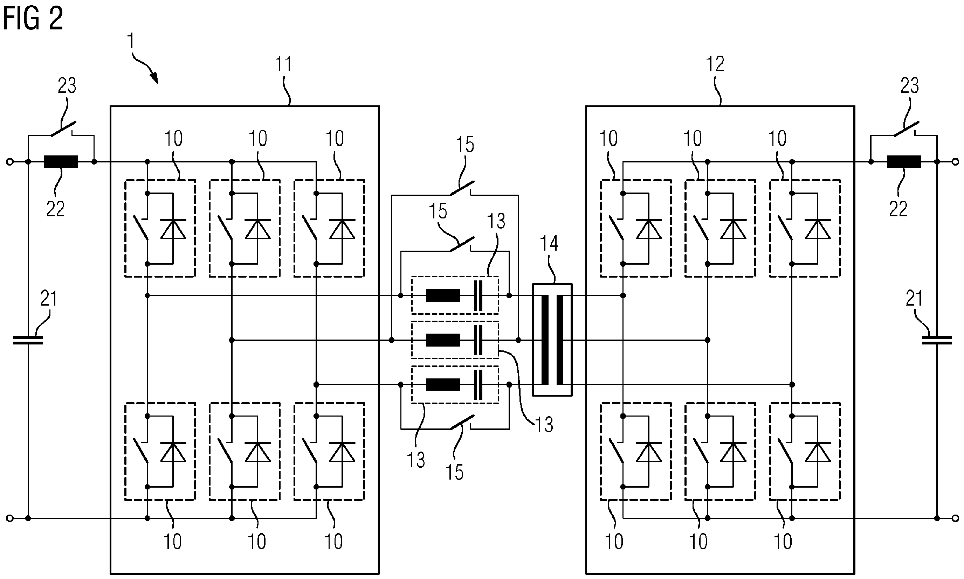

FIG 1 und 2     Ausführungsbeispiele für einen Gleichstromsteller mit integriertem Hoch- und Tiefsetzsteller

Die FIG 1 zeigt einen resonanten Gleichstromsteller 1 mit einem ersten Stromrichter 11 und einem zweiten Stromrichter 12. Diese beiden Stromrichter sind wechselspannungsseitig über einen Resonanzkreis 13 und einen Transformator 14 miteinander verbunden. Die Stromrichter 11, 12 weisen Halbleiter 10 auf, um je nach Betriebsart als Gleichrichter oder Wechselrichter eine Gleich- bzw. Wechselspannung erzeugen zu können. Der Resonanzkreis 13 kann mittels eines Schalters 15 überbrückt werden. Auf der Gleichspannungsseite des ersten und des zweiten Stromrichters 11, 12 befindet sich jeweils eine Reihenschaltung aus Kondensator 21 und Induktivität 22. Die Induktivität 22 kann mittels eines weiteren Schalters 23 überbrückt werden. Mit Hilfe der Induktivitäten 22 ist es möglich, den ersten Stromrichter 11 oder den zweiten Stromrichter 12 sowie beide Stromrichter 11, 12 als Hoch- oder Tiefsetzsteller zu verwenden. Damit kann der Betriebsbereich des resonanten Gleichstromstellers 1 deutlich erweitert werden. Parallel zum Kondensator 21 können jeweils Gleichspannungsnetze angeschlossen werden. Zwischen diesen Gleichspannungsnetzen ist mit Hilfe des resonanten Gleichstromstellers 1 ein gesteuerter oder geregelter Energieaustausch möglich.

Die FIG 2 zeigt ein weiteres Ausführungsbeispiel eines resonanten Gleichstromstellers 1. Zur Vermeidung von Wiederholungen wird auf die Beschreibung zur FIG 1 sowie auf die dort eingeführten Bezugszeichen verwiesen. Im Gegensatz zum vorhergehenden Ausführungsbeispiel ist das Ausführungsbeispiel der FIG 2 mit einem dreiphasigen Transformator zur Energieübertragung ausgestattet. Damit sind auch die Wechselspannungsseiten des ersten Stromrichters 11 und des zweiten Stromrichters 12 dreiphasig ausgebildet. In jeder der drei Phasen befindet sich ein Resonanzkreis 13, der auch hier mittels eines Schalters 15 überbrückbar ist. Mit Hilfe dieser Anordnung lässt sich die übertragbare Leistung um ca. 70% gegenüber dem vorhergehenden Ausführungsbeispiel erhöhen.

Zusammenfassend betrifft die Erfindung einen resonanten Gleichstromsteller mit einem ersten Stromrichter und einem zweiten Stromrichter, wobei die Stromrichter eine Gleichspannungsseite und eine Wechselspannungsseite aufweisen, wobei die Wechselspannungsseiten des ersten und des zweiten Stromrichters über einen Resonanzkreis und einen Transformator miteinander verbunden sind, wobei der Resonanzkreis mittels eines Schalters überbrückbar ist, wobei die Stromrichter an der Gleichspannungsseite jeweils mit einer Reihenschaltung aus einem Kondensator und einer Induktivität elektrisch verbunden sind, wobei die Induktivität jeweils mit einem weiteren Schalter überbrückbar ist. Ferner betrifft die Erfindung ein Verfahren zum Betreiben eines derartigen resonanten Gleichstromstellers, wobei zum Übertragen von elektrischer Energie zwischen den Gleichspannungsseiten der Stromrichter die weiteren Schalter zur Überbrückung der Induktivität geöffnet sind.

**Patentansprüche**

1. Resonanter Gleichstromsteller (1) mit einem ersten Stromrichter (11) und einem zweiten Stromrichter (12), wobei die Stromrichter (11,12) eine Gleichspannungsseite und eine Wechselspannungsseite aufweisen, wobei die Wechselspannungsseiten des ersten und des zweiten Stromrichters (11,12) über einen Resonanzkreis (13) und einen Transformator (14) miteinander verbunden sind, wobei der Resonanzkreis (13) mittels eines Schalters (15) überbrückbar ist, wobei die Stromrichter (11,12) an der Gleichspannungsseite jeweils mit einer Reihenschaltung aus einem Kondensator (21) und einer Induktivität (22) elektrisch verbunden sind, wobei die Induktivität (22) jeweils mit einem weiteren Schalter (23) überbrückbar ist.

2. Resonanter Gleichstromsteller (1) nach Anspruch 1, wobei der erste und der zweite Stromrichter (11,12) jeweils als dreiphasiger Stromrichter ausgebildet sind, wobei der Transformator (14) als dreiphasiger Transformator ausgebildet ist, wobei in der Verbindung zwischen erstem Stromrichter und Transformator jede Phase den Resonanzkreis (13) aufweist, der mittels des Schalters (15) überbrückbar ist.

3. Verfahren zum Betreiben eines resonanten Gleichstromstellers (1) nach einem der Ansprüche 1 oder 2, wobei zum Übertragen von elektrischer Energie zwischen den Gleichspannungsseiten der Stromrichter (11,12) die weiteren Schalter (23) zur Überbrückung der Induktivität (22) geöffnet sind.

4. Verfahren zum Betreiben eines resonanten Gleichstromstellers (1) nach einem der Ansprüche 1 oder 2, wobei zum Übertragen von elektrischer Energie von der Gleichspannungsseite des ersten Stromrichters (11) zur Gleichspannungsseite des zweiten Stromrichters (12)

   - der Schalter (15) zur Überbrückung des Resonanzkreises (13) geöffnet ist
   - die weiteren Schalter (23) zur Überbrückung der Induktivität (22) geschlossen sind und
   - Halbleiter des ersten Stromrichters (11) takten.

5. Verfahren zum Betreiben eines resonanten Gleichstromstellers (1) nach einem der Ansprüche 1 oder 2, wobei zum Übertragen von elektrischer Energie von der Gleichspannungsseite des ersten Stromrichters (11) zur Gleichspannungsseite des zweiten Stromrichters (12)

   - der Schalter (15) zur Überbrückung des Resonanzkreises (13) geschlossen ist
   - der weitere Schalter (23) zur Überbrückung der Induktivität (22) am ersten Stromrichter (11) geschlossen ist,
- der weitere Schalter (23) zur Überbrückung der Induktivität (22) am zweiten Stromrichter (12) geöffnet ist und
- Halbleiter des ersten Stromrichters (11) takten.

6. Verfahren zum Betreiben eines resonanten Gleichstromstellers (1) nach einem der Ansprüche 1 oder 2, wobei zum Übertragen von elektrischer Energie von der Gleichspannungsseite des zweiten Stromrichters (12) zur Gleichspannungsseite des ersten Stromrichters (11)

    - der Schalter (15) zur Überbrückung des Resonanzkreises (13) geschlossen ist
    - der weitere Schalter (23) zur Überbrückung der Induktivität (22) am ersten Stromrichter (11) geöffnet ist,
    - der weitere Schalter (23) zur Überbrückung der Induktivität (22) am zweiten Stromrichter (12) geschlossen ist und
    - Halbleiter des zweiten Stromrichters (12) takten.

FIG 1

FIG 2

Europäisches
Patentamt

European
Patent Office

Office européen
des brevets

**EUROPÄISCHER RECHERCHENBERICHT**

Nummer der Anmeldung

EP 17 19 3979

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | EP 2 863 531 A1 (PANASONIC IP MAN CO LTD [JP]) 22. April 2015 (2015-04-22) * Abbildung 2 * ----- | 1-6 | INV. H02M3/335 ADD. H02M7/48 |
| A | OUTEIRO MARIA TERESA ET AL: "Design, implementation and experimental validation of a DC-DC resonant converter for PEM fuel cell applications", IECON 2013 - 39TH ANNUAL CONFERENCE OF THE IEEE INDUSTRIAL ELECTRONICS SOCIETY, IEEE, 10. November 2013 (2013-11-10), Seiten 619-624, XP032538611, ISSN: 1553-572X, DOI: 10.1109/IECON.2013.6699206 [gefunden am 2013-12-30] * Absatz III.A; Abbildung 4 * ----- | 1-6 | |
| Y | US 2014/103860 A1 (KOMINAMI SATOSHI [JP] ET AL) 17. April 2014 (2014-04-17) * Abbildung 1 * * Absatz [0075] - Absatz [0078] * * Absatz [0095] - Absatz [0096] * ----- | 1-6 | |
| A | JP H08 154311 A (NIPPON DENSO CO) 11. Juni 1996 (1996-06-11) * Abbildung 1 * ----- | 1-6 | RECHERCHIERTE SACHGEBIETE (IPC) H02M |

Der vorliegende Recherchenbericht wurde für alle Patentansprüche erstellt

| Recherchenort | Abschlußdatum der Recherche | Prüfer |
|---|---|---|
| Den Haag | 29. März 2018 | Madouroglou, E |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 19 3979

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-03-2018

| Im Recherchenbericht angeführtes Patentdokument | Datum der Veröffentlichung | Mitglied(er) der Patentfamilie | Datum der Veröffentlichung |
|---|---|---|---|
| EP 2863531 A1 | 22-04-2015 | EP 2863531 A1<br>JP 5906418 B2<br>JP 2014003764 A<br>US 2015124490 A1<br>WO 2013186991 A1 | 22-04-2015<br>20-04-2016<br>09-01-2014<br>07-05-2015<br>19-12-2013 |
| US 2014103860 A1 | 17-04-2014 | CN 103597725 A<br>JP 5475936 B1<br>JP WO2013179674 A1<br>US 2014103860 A1<br>WO 2013179674 A1 | 19-02-2014<br>16-04-2014<br>18-01-2016<br>17-04-2014<br>05-12-2013 |
| JP H08154311 A | 11-06-1996 | KEINE | |

Für nähere Einzelheiten zu diesem Anhang : siehe Amtsblatt des Europäischen Patentamts, Nr.12/82